# EUROPEAN PATENT SPECIFICATION

(11) **EP 0 771 520 B1**
(45) Date of publication and mention of the grant of the patent: **07.08.2002**
(21) Application number: 96203058.1
(22) Date of filing: 04.11.1996
(51) Int. Cl.: A01B 33/16

(54) **A rotary harrow**
Kreiselegge
Herse rotative

(30) Priority: 06.11.1995 NL 1001579
(43) Date of publication of application: 07.05.1997
(73) Proprietor: MAASLAND N.V., 3155 PD Maasland (NL)
(72) Inventor: Bom, Cornelis Johannes Gerardus, 3181 VC Rozenburg (NL)
(74) Representative: Corten, Maurice Jean F.M.

(56) References cited:
- EP-A- 0 109 724
- EP-A- 0 181 044
- FR-A- 2 113 810
- FR-A- 2 519 229
- GB-A- 2 025 192
- GB-A- 2 130 862
- NL-A- 6 800 460
- NL-A- 7 706 042
- NL-A- 9 300 659
- US-A- 3 402 774

## Description

The present invention relates to a soil cultivating machine according to the preamble of claim 1.

Such a rotary harrow is known from the Dutch publication 9300659. This machine has the advantage that the preparation of a planting bed and the planting of seedlings can be executed in one working run, without the risk that earth, on which the tractor has driven and which, consequently, has turned to clods, gets into the planting rows.

The present invention aims at improving the construction of this known machine.

According to the present invention, this is achieved in that the soil cultivating machine comprises the features of the characterising part of claim 1. Such a construction will need less power and the work can be carried out at a higher speed because the proposed construction renders a so-called levelling and crumbling beam superfluous, so that the braking effect of the machine is reduced. An additional advantage is that the length of the machine in the direction of travel is decreased and, consequently, the centre of gravity of the machine will be located closer to the tractor. In the present machine, the heaviest machine parts are constituted by the frame and the foremost roller, which are both arranged in front of the soil displacing device, so that the proposed construction reduces the power required for lifting the machine to a relatively considerable extent.

From GB-A-2,130,862 a soil cultivating implement is known per se comprising a screen of tines which are uniformly distributed over the width of the implement.

In a favourable embodiment of the invention, between the guide surfaces facing each other of two neighbouring soil guide means, there are provided at least two tines in such a way that a surface, orientated substantially vertically and transversely to the direction of travel, is defined by the tines. By means of a suchlike arrangement there is achieved an additional crumbling, whereby, on the one hand, the earth crumbled by the cultivating members of the harrow or by the tines of the soil displacing device is immediately let through and, on the other hand, the clods that have not immediately been crumbled by the tines may still be kept within the working range of the cultivating members. In this way, the crumbling function of the conventional levelling and crumbling beam is both replaced and improved: although larger clods tend to arrive at the soil surface during treatment by the cultivator - smaller particles tend to make-up the lower layer by falling between the larger clods - the larger clods may also be present in an upper layer of the worked soil. The proposed tines may pass through this layer and may thus keep also these clods within the crumbling range of the cultivating members.

A further improvement of the proposed construction consists in that the soil displacing device is provided with adjusting means, by means of which the tines can be adjusted in height relative to the soil guide means. In this manner the machine may favourably be adapted to the prevailing circumstances, e.g. such that the soil guide means are active in a deep layer of the soil, while the tines, in relation to the soil guide elements, operate relatively superficially. This may have a favourable influence on the power required, while nevertheless there is obtained a sufficient crumbling.

A further advantageous aspect of the invented construction concerns the feature that the foremost edge of a soil guide means is bent forward and, in an imaginary vertical plane extending in the direction of travel, forms an angle of less than 90° and more than 60° relative to a horizontal plane. Due to said feature, during displacing the soil, the relatively dry upper layers of the soil maintain their position in relation to the relatively humid deeper layers. Said feature also contributes to the sturdiness of the created ridge, so that little earth gets into the tram-line of the tractor, e.g. due to local subsidence, and the ridge will remain better intact during the subsequent planting process.

For a better understanding of the present invention and to show how the same may be carried into effect, reference will now be made, by way of example, to the accompanying drawing, in which:
Figure 1 is a plan view of a rotary harrow in accordance with the invention, represented in a position in which it is coupled with the partially visible lifting hitch of a tractor;
Figure 2 is a side view according to the arrow II in Figure 1, and
Figure 3 is a view taken on the line III-III in Figure 1.

In the drawings, corresponding parts have been indicated by the same reference numerals. Furthermore, the invention is by no means restricted to the embodiments shown and described here; they only serve to illustrate the inventive idea.

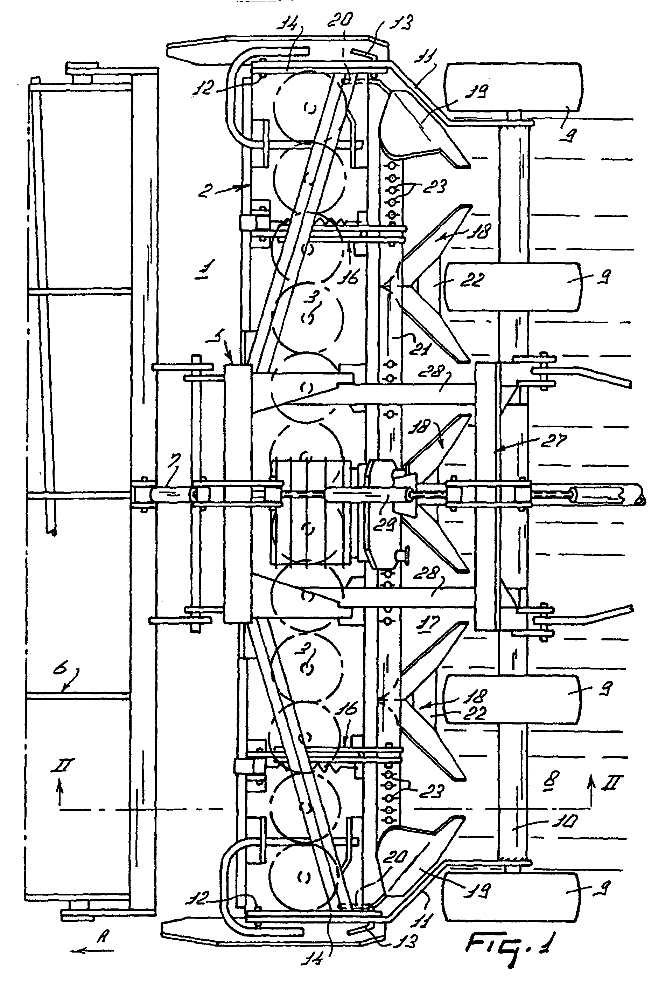

Figure 1 shows, in plan view, a rotary harrow 1, to be coupled with the foremost lifting hitch of a tractor. The rotary harrow 1 comprises a main frame 2, in which soil cultivating members 4, drivable about upwardly orientated pivot shafs 3, are bearing-supported and on which a coupling trestle 5 is disposed. Near its front side the rotary harrow comprises a roller 6, included in the coupling points of the coupling trestle 5, which roller 6 is adjustable in height relative to the main frame 2 about the lower coupling points of the coupling trestle by means of a screw spindle 7. Near its rear side the rotary harrow is provided with a supporting device 8 including free rotatable roller elements 9, alternatively denoted supporting elements, which, in the present embodiment, are fixed about a common carrier 10, orientated transversely to the direction of travel A, which, near its ends, is connected in a bearing-supported manner with arms 11 of the supporting device 8. The arms 11 are connected with the main frame via a horizontal pivot shaft 12. The supporting device 8 is adjustable in height relative to the main frame 2 by means of an adjusting pin 13, to be disposed, at the upper side of an arm 11, in various apertures of a substantially upwardly orientated supporting plate 14 connected with the main frame 2. Furthermore, a strut extends between the upper side and the front side of the trestle and the rear side of the supporting plate 14.

The arm comprises a front and a rear part which in this embodiment both extend in the direction of operational travel, and a middle part which generally extends obliquely relative to said front and rear part. Such form facilitates an outermost positioning of the outer supporting elements 9 within the machine, while keeping the dimensions of the machine within a legally allowed transport width. In this embodiment the rear portion of an arm 11 is coupled to an axle part for the relevant outer supporting element 9, arranged at the outer ends of a common tube-shaped carrier 10, forming the axis for the supporting elements 9.

The supporting device 8 comprises four supporting elements 9, of which the inner two are connected to the common carrier 10 by bolting a rim part to a flange provided at said carrier 10. The distance between the inner two support elements 9 is about twice the distance between an outer and an inner support 9: no wheel bears in the inner furrow of the five furrows which are generally created within the standard transport and working width of three meters. This construction favourably and economically fulfils its function of sustaining the machine in addition to the front roller so that a better depth adjustment and a smoother functioning of the harrow is obtained, and fulfils equally well its function of guiding the machine and tractor-combination through the furrows.

Between the supporting device 8 and the main frame 2, there is disposed, via two spaced apart pivotable quadrangular constructions 16 connected with the main frame, a soil displacing device 17. The soil displacing device 17 comprises a number of soil guide means 18 which, as for their front part, have approximately the shape of a vertically arranged saddle roof, but whose foremost edge is in a trailing position, and, in the present embodiment, forms an angle of 70° relative to the direction of travel. In accordance with the invention, this angle can be given, depending on the type of soil to be treated, a value lying between 85° and 60°. Near the lateral ends of the machine there are disposed soil guide means 19, corresponding to a large extent to half of the other soil guide means 18. Near their sides located on the outside the soil guide means 19 are provided with a vertical screen 20, orientated in the direction of travel A, extending forwardly from the soil guide means 19, which screen 20 is constituted by a plate part. In a preferred embodiment, this plate part 20 extends in line with the outer surface of the relevant outer roller element 9 and, preferably, somewhat outside that line. In forward direction, this plate part 20 extends at least until almost the rearmost common tangent of the cultivating members 4. Near their upper sides and front sides the soil guide means 18 and 19 are fastened to a common carrier 21. In the present embodiment, the carrier 21 is tubular and more in particular constituted by a tube.

Near the foremost part of the soil 17, in particular just behind a foremost part of the foremost edge of a soil guide means (18, 19), there is disposed each time between two surfaces facing each other of a soil guide means 18, 19 a row of substantially vertically arranged tines 23. For that purpose, in a non-shown embodiment, the carrier 21 is provided with tine holders in which the tines are adjustable in height. In the relevant embodiment, the tine holders are disposed each time above a vertical borehole in the carrier 21.

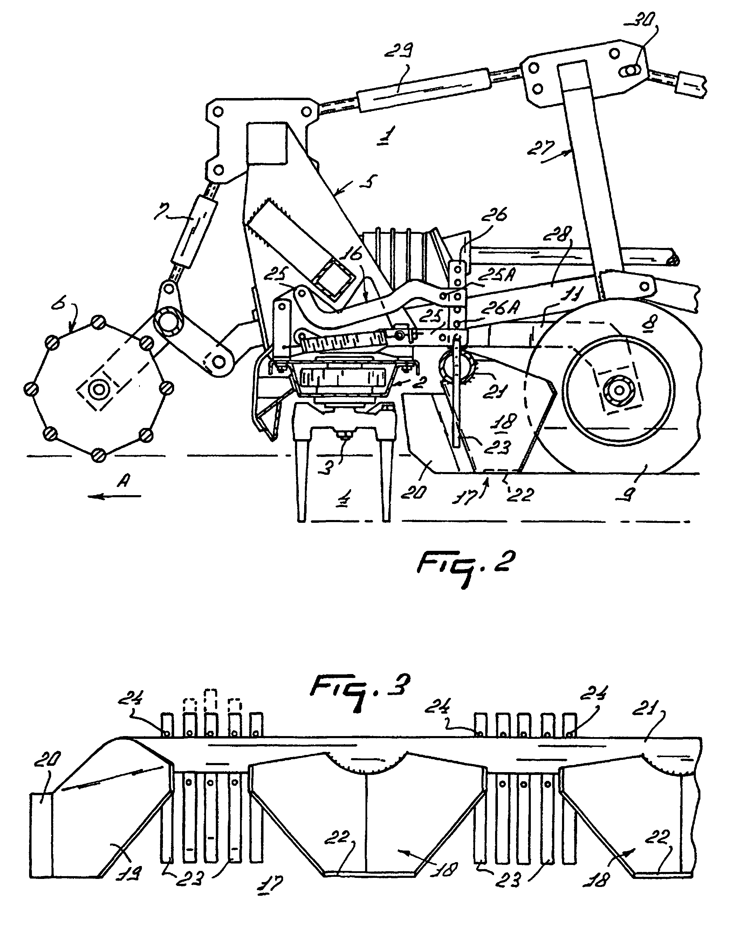

Furthermore, the carrier 21 is arranged immediately behind the row of soil cultivating members 4. As shown in Figure 2, the quadrangular construction 16 is produced in the form of a parallelogram having unidentical parallelogram arms 25, and, via boreholes 25A, the carrier 21 can be coupled with the quadrangular construction 16, in at least two positions, differing in distance relative to the row of soil cultivating members 4. The carrier 21 is coupled with the quadrangular construction via substantially upwardly orientated supports 26. The latter are provided with various boreholes 26A, in such a way that a plurality of relative adjustments in height of the soil displacing device 17 relative to the main frame 2 are possible. The lower borehole 26A thereof is disposed almost in the immediate vicinity of the carrier 21. In a preferred embodiment, the operative height of the guide means 18, 19, i.e. their height below the carrier 21, corresponds nearly to the length of the operative part of the tines of a soil cultivating member 4, i.e. approximately 23 cm in the embodiment shown.

In a preferred embodiment, the tines 23, disposed between the guide means 18, 19, have a quadrangular cross-section. The tines 23 can extend with an operative part from the lower side of the carrier 21 downwardly at least until half the height of the local maximum operative height of a soil guide means 18, 19. For that purpose, the tines 23 are provided with boreholes, via which a tine 23, via a locking pin 24 bearing on the carrier 21, can be adjusted in height in different positions.

The main frame 2 is connected with the foremost lifting hitch of a tractor via an intermediate three-point trestle 27. The latter is provided, near its lower coupling points, with two fixed arms 28, extending substantially forwardly, and, near its upper side, with a top rod 29, pivotably disposed and adjustable in length, which top rod 29 is also connected with the trestle 5. The upper coupling point of the three-point trestle 27 comprises a slotted hole 30, provided at the side for the fastening of the top rod constituting part of the connection with the tractor.

The function of the machine will be explained in what follows.

During operation the machine 1 bears both on the roller 6 and the supporting device 8, and the pivot shaft for the top rod of the tractor is in an initial position in the centre of the slotted hole 30. The machine can also be used without the foremost roller 6; then the pivot shaft of the top rod of the tractor is located at the end of a slotted hole 30 situated at the side of the tractor. The earth loosened by the rotors 4 is immediately collected by the soil displacing device 17 and guided so as to be arranged in ridges. Hereby only a minimum mixture between various layers of soil occurs. By means of the tines 23, there is created a screen letting through the earth in such a way that only relatively big clods are kept in the working range of the soil cultivating members 4. The deeper the soil displacing device 17 is adjusted relative to the soil cultivating members 4, the higher the tines 23 will have to be adjusted. The fact is that for big clods, that do not break up immediately, there occurs a separating effect during cultivation of the soil, whereby said clods remain behind in the upper layers of the treated soil, while relatively small particles of soil, during cultivation, fall between the big particles of soil and get into deeper layers. During operation, a deep adjustment of the tines 23 then leads to an unnecessary requirement of power.

The mutually in V-shape arranged soil guide means 18 push the treated soil horizontally sidewards, so that the earth in their in-between openings is raised. By pushing the earth sidewards, there is also achieved that the ridge to be created is tightly pressed. For the purpose of properly letting through the treated soil between two soil guide means 18, the middle ones of a group of tines 23 disposed between two soil guide means, can be adjusted higher than the outer tines 23. This is indicated in dashed lines in Figure 3. The tines 23 having a square cross-section are facing with a flat side the direction of travel, so that a tine 23 is located with at least one angular edge in the flow of earth forced by the guide means 18, 19, which contributes to the crumbling effect of the tines 23.

At the side of the still untreated soil, the plate part 20 ensures a sharp cutting and an easy flow of treated soil to the relevant outer ridge, which enables an unhampered passage of the relevant outer roller element 9. At the side of the machine where the soil is already treated, the plate 20 ensures that the soil treated by the relevant rotor 4 is collected in such a way that as little earth as possible remains behind in the relevant outer furrow.

The arrangement of the displacing device 17 immediately behind the soil cultivating members 4 leads, in accordance with the invention, to a favourable requirement of power of the machine. The application of a tine screen in combination with the aforementioned construction ensures a favourable crumbling of the earth. The present construction has also the advantage that the machine can be maintained compact. Due to this the centre of gravity of the machine will be close to the tractor, so that the lifting force to be provided by the tractor will be small and it will be possible to use the machine with a plurality of tractors.

The invention is not restricted to the aforementioned description, but also relates to all the details of the drawings. The invention furthermore relates to all sorts of alternatives in the construction, of course, falling within the scope of the following claims.

## Claims

1. A soil cultivating machine comprising a rotary harrow (1) with soil cultivating members (4), in particular to be mounted to the foremost three-point lifting hitch of a tractor which rotary harrow comprises a soil displacing device (17) for creating planting ridges, disposed immediately behind the soil cultivating members (4) of the rotary harrow which soil displacing device (17) is provided with soil displacing elements (18, 19) with substantially vertical guide surfaces, arranged, as seen from above, at an obtuse angle relative to the direction of travel A, **characterized in that** the soil displacing device carries one or more soil crumbling tines (23) between facing sides of neighbouring soil displacing elements (18, 19).

2. A soil cultivating machine according to claim 1, **characterized in that** the tines (23) are at least substantially upwardly orientated.

3. A machine as claimed in claim 1 or 2, **characterized in that,** between the displacing elements surfaces facing each other of two neighbouring soil displacing elements (18, 19), there are provided at least two tines (23) in a row in such a way that a surface, orientated substantially vertically and transversely to the direction of travel A, is defined by the tines (23).

4. A machine as claimed in claim 1, 2 or 3, **characterized in that** the soil displacing device (17) is provided with adjusting means (24), by means of which the tines (23) can be adjusted in height relative to the soil displacing elements (18, 19).

5. A machine as claimed in any one of the preceding claims, **characterized in that** the front side of the soil displacing device (17) and/or one or more tines (23) thereof are arranged within the working range of the soil cultivating members (4), at least at a distance of less than 25 cm.

6. A machine as claimed in any one of the preceding claims, **characterized in that** the foremost edge of a soil displacing element (18) is bent forward and, in an imaginary vertical plane extending in the direction of travel, forms an angle of less than 90° and more than 60° relative to a horizontal plane.

7. A machine as claimed in any one of the preceding claims, **characterized in that** the soil displacing device (17) is connected with a frame (2) of the rotary harrow (1) via a pivotable quadrangular construction (16) including an upper and a lower arm, and, for that purpose, is provided with substantially upwardly orientated supports (26), in which a plurality of apertures (26A) are disposed in such a way that the soil displacing device (17) can be adjusted in height relative to the quadrangular construction (16) whilst maintaining the quadrangular configuration.

8. A machine as claimed in claim 7, **characterized in that** the tines (23) are supported by means of openings of a substantially transverse horizontal carrier (21) of the displacing device (17).

9. A machine as claimed in claim 7 or 8, **characterized in that** both the upper arm (25) and the lower arm (25) of the quadrangular construction (16) are provided with a plurality of openings (25A) suitable for the purpose of including a pivot shaft of the quadrangular construction (16), in such a way that the soil displacing device (17) can be disposed in at least two different positions behind the soil cultivating members (4) whilst maintaining the form of the quadrangular construction (16).

10. A machine as claimed in any one of the preceding claims, **characterized in that** an outer soil displacing element (19) is provided with a displacing element portion (20) extending, almost in line with the end of the roller (6) or outside that line, vertically and in the direction of travel A and in front of the other soil displacing elements (18).

11. A machine as claimed in any one of the preceding claims, **characterized in that** a tine (23) is adjustable in a position in which same extends downwardly at least until halfway the local cultivation height and preferably until at least three-quarter thereof.

12. A machine according to claim 11, **characterized in that** the machine is provided with V-shaped soil displacing elements (18, 19) of which the front edge forms an acute angle with the direction of travel, as seen from aside.

13. A machine according to any one of the preceding claims, **characterized in that** it comprises a supporting device (8) including supporting elements (9) fixed about a common carrier (10), which carrier (10) is near its ends connected with coupling arms (11) with, as seen in plan view, a central arm part which extends obliquely between and relative to a front and a rear arm part.

## Patentansprüche

1. Bodenbearbeitungsmaschine, die eine mit Bodenbearbeitungsgliedern (4) versehene Kreiselegge (1) umfaßt, die insbesondere an die vordere Dreipunkt-Hebevorrichtung eines Schleppers anschließbar ist, wobei die Kreiselegge zum Bilden vom Pflanzdämmen eine Bodenverlagerungsvorrichtung (17) umfaßt, die unmittelbar hinter den Bodenbearbeitungsgliedern (4) der Kreiselegge angeordnet ist, wobei die Bodenverlagerungsvorrichtung (17) mit Bodenverlagerungselementen (18, 19) mit im wesentlichen vertikalen Führungsoberflächen versehen ist, die von oben betrachtet in einem stumpfen Winkel zur Arbeitsrichtung A angeordnet sind,
**dadurch gekennzeichnet, daß** die Bodenverlagerungsvorrichtung einen oder mehrere Bodenkrümelzinken (23) trägt, die zwischen gegenüberliegenden Seiten von benachbarten Bodenverlagerungselementen (18, 19) angeordnet sind.

2. Bodenbearbeitungsmaschine nach Anspruch 1,
**dadurch gekennzeichnet, daß** die Zinken (23) zumindest im wesentlichen aufwärts gerichtet sind.

3. Maschine nach Anspruch 1 oder 2,
**dadurch gekennzeichnet, daß** zwischen den einander zugewandten Verlagerungselement-Oberflächen von zwei benachbarten Bodenverlagerungselementen (18, 19) mindestens zwei Zinken (23) in einer Reihe derart angeordnet sind, daß durch die Zinken (23) eine im wesentlichen vertikal und quer zur Arbeitsrichtung A ausgerichtete Oberfläche gebildet ist.

4. Maschine nach Anspruch 1, 2 oder 3,
**dadurch gekennzeichnet, daß** die Bodenverlagerungsvorrichtung (17) mit Stellvorrichtungen (24) versehen ist, mittels derer die Zinken (23) relativ zu den Bodenverlagerungselementen (18, 19) in der Höhe verstellt werden können.

5. Maschine nach einem der vorhergehenden Ansprüche,
**dadurch gekennzeichnet, daß** die Vorderseite der Bodenverlagerungsvorrichtung (17) und/oder eines oder mehrerer Zinken (23) derselben innerhalb der Arbeitsbreite der Bodenbearbeitungsglieder (4) zumindest in einem Abstand von weniger als 25 cm angeordnet sind.

6. Maschine nach einem der vorhergehenden Ansprüche,
**dadurch gekennzeichnet, daß** die vordere Kante eines Bodenverlagerungselementes (18) nach vorn umgebogen ist und in einer sich in Arbeitsrichtung erstreckenden, gedachten, vertikalen Ebene einen Winkel von weniger als 90° und mehr als 60° mit einer horizontalen Ebene bildet.

7. Maschine nach einem der vorhergehenden Ansprüche,
**dadurch gekennzeichnet, daß** die Bodenverlagerungsvorrichtung (17) mit einem Rahmen (2) der Kreiselegge (1) über eine schwenkbare Viergelenk-Konstruktion (16) mit einem oberen und einem unteren Arm verbunden und zu diesem Zweck mit im wesentlichen aufwärts gerichteten Stützen (26) versehen ist, in denen mehrere Öffnungen (26A) derart angeordnet sind, daß die Bodenverlagerungsvorrichtung (17) relativ zu der Viergelenk-Konstruktion (16) in der Höhe verstellt werden kann, wobei die Viergelenk-Konfiguration erhalten bleibt.

8. Maschine nach Anspruch 7,
**dadurch gekennzeichnet, daß** die Zinken (23) durch Öffnungen eines im wesentlichen quer angeordneten, horizontalen Trägers (21) der Verlagerungsvorrichtung (17) abgestützt sind.

9. Maschine nach Anspruch 7 oder 8,
**dadurch gekennzeichnet, daß** sowohl der obere Arm (25) als auch der untere Arm (25) der Viergelenk-Konstruktion (16) mit mehreren Öffnungen (25A) versehen sind, die zur Aufnahme einer Schwenkachse der Viergelenk-Konstruktion (16) geeignet sind, derart, daß die Bodenverlagerungsvorrichtung (17) in mindestens zwei unterschiedlichen Positionen hinter den Bodenbearbeitungsgliedern (4) angeordnet werden kann, wobei die Form der Viergelenk-Konstruktion (16) erhalten bleibt.

10. Maschine nach einem der vorhergehenden Ansprüche,
**dadurch gekennzeichnet, daß** ein äußeres Bodenverlagerungselement (19) mit einem Verlagerungselement-Ahschnitt (20) versehen ist, der sich nahezu in einer Linie mit dem Ende der Walze (6) oder außerhalb dieser Linie in vertikaler Richtung und in Arbeitsrichtung A und vor den anderen Bodenverlagerungselementen (18) erstreckt.

11. Maschine nach einem der vorhergehenden Ansprüche,
**dadurch gekennzeichnet, daß** ein Zinken (23) in eine Position einstellbar ist, in der er sich nach unten zumindest bis zur Hälfte der lokalen Bearbeitungshöhe und vorzugsweise zumindest bis zu drei Vierteln derselben erstreckt.

12. Maschine nach Anspruch 11,
**dadurch gekennzeichnet, daß** die Maschine mit V-förmigen Bodenverlagerungselementen (18, 19) versehen ist, deren vordere Kante in Seitenansicht einen spitzen Winkel mit der Arbeitsrichtung bildet.

13. Maschine nach einem der vorhergehenden Ansprüche,
**dadurch gekennzeichnet, daß** sie eine Stützvorrichtung (8) mit an einem gemeinsamen Träger (10) befestigten Stützelementen (9) umfaßt, wobei der Träger (10) nahe seinen Enden mit Kupplungsarmen (11) verbunden ist, die in Draufsicht einen mittleren Armteil aufweisen, der sich schräg zwischen und relativ zu einem vorderen und einem hinteren Armteil erstreckt.

## Revendications

1. Machine de travail du sol comprenant une herse rotative (1) comportant des éléments de travail du sol (4), en particulier à monter sur l'attelage de levage en trois points avant d'un tracteur, laquelle herse rotative comprend un dispositif de déplacement du sol (17) pour créer des sillons de plantation, disposé immédiatement derrière les éléments de travail du sol (4) de la herse rotative, lequel dispositif de déplacement du sol (17) est pourvu d'éléments de déplacement du sol (18, 19) présentant des surfaces de guidage sensiblement verticales, agencés, tel que vu de dessus, selon un angle obtus par rapport à la direction de déplacement A, **caractérisée en ce que** le dispositif de déplacement du sol supporte une ou plusieurs dents d'émiettage du sol (23) entre les côtés se faisant face des éléments de déplacement du sol (18, 19) voisins.

2. Machine de travail du sol selon la revendication 1, **caractérisée en ce que** les dents (23) sont au moins orientées sensiblement vers le haut.

3. Machine selon la revendication 1 ou 2, **caractérisée en ce que**, entre les surfaces des éléments de déplacement se faisant face l'une l'autre de deux éléments de déplacement du sol (18, 19) voisins, au moins deux dents (23) sont prévues en une rangée de telle manière qu'une surface, orientée sensiblement verticalement et transversalement à la direction de déplacement A, soit définie par les dents (23).

4. Machine selon la revendication 1, 2 ou 3, **caractérisée en ce que** le dispositif de déplacement du sol (17) est pourvu de moyens d'ajustement (24), au moyen desquels les dents (23) peuvent être réglées en hauteur par rapport aux éléments de déplacement du sol (18, 19).

5. Machine selon l'une quelconque des revendications précédentes, **caractérisée en ce que** le côté avant du dispositif de déplacement du sol (17) et/ou une ou plusieurs dents (23) de celui-ci sont agencés à l'intérieur d'une plage de travail des éléments de travail du sol (4), au moins à une distance inférieure à 25 cm.

6. Machine selon l'une quelconque des revendications précédentes, **caractérisée en ce que** le bord avant d'un élément de déplacement du sol (18) est courbé vers l'avant et, dans un plan vertical imaginaire s'étendant dans la direction de déplacement, forme un angle inférieur à 90° et supérieur à 60° par rapport à un plan horizontal.

7. Machine selon l'une quelconque des revendications précédentes, **caractérisée en ce que** le dispositif de déplacement du sol (17) est relié à un cadre (2) de la herse rotative (1) par l'intermédiaire d'une construction pivotante quadrangulaire (16) comprenant un bras supérieur et un bras inférieur, et, à cette fin, est pourvu de supports orientés sensiblement vers le haut (26), dans lesquels une pluralité d'ouvertures (26A) sont disposées de telle manière que le dispositif de déplacement du sol (17) puisse être réglé en hauteur par rapport à la construction quadrangulaire (16) tout en maintenant la configuration quadrangulaire.

8. Machine selon la revendication 7, **caractérisée en ce que** les dents (23) sont supportées au moyen d'ouvertures d'un support horizontal sensiblement transversal (21) du dispositif de déplacement (17).

9. Machine selon la revendication 7 ou 8, **caractérisée en ce que** le bras supérieur (25) et le bras inférieur (25) de la construction quadrangulaire (16) sont tous deux pourvus d'une pluralité d'ouvertures (25A) adaptées dans le but d'inclure un arbre de pivotement de la construction quadrangulaire (16), de telle manière que le dispositif de déplacement du sol (16) puisse être disposé au moins dans deux positions différentes derrière les éléments de travail du sol (4) tout en maintenant la forme de la construction quadrangulaire (16).

10. Machine selon l'une quelconque des revendications précédentes, **caractérisée en ce qu'**un élément de déplacement du sol extérieur (19) est pourvu d'une partie d'élément de déplacement (20) s'étendant, pratiquement dans l'alignement de l'extrémité du rouleau (6) ou décaler de celle-ci, verticalement et dans la direction de déplacement A et t devant les autres éléments de déplacement du sol (18).

11. Machine selon l'une quelconque des revendications précédentes, **caractérisée en ce qu'**une dent (23) est réglable dans une position dans laquellè la susdite s'étend vers le bas au moins jusqu'à la moitié de la hauteur de travail du sol locale et, de préférence, au moins jusqu'au trois quarts de celle-ci.

12. Machine selon la revendication 4, **caractérisée en ce que** la machine est pourvue d'éléments de déplacement du sol en forme de V (18, 19) dont le bord avant forme un angle aigu avec la direction de déplacement, tel que vu latéralement.

13. Machine selon l'une quelconque des revendications précédentes, **caractérisée en ce qu'**elle comprend un dispositif de support (8) comprenant des éléments de support (9) fixés autour d'un support commun (10), lequel support (10) est, à proximité de ses extrémités, relié à des bras d'accouplement (11) avec, tel que vu en vue plane, une partie de bras centrale qui s'étend obliquement entre et par rapport à une partie de bras avant et arrière.
